Europäisches Patentamt

European Patent Office

Office européen des brevets

(19)

(11) **EP 1 206 378 B1**

(12) **EUROPÄISCHE PATENTSCHRIFT**

(45) Veröffentlichungstag und Bekanntmachung des Hinweises auf die Patenterteilung:
**22.09.2004   Patentblatt 2004/39**

(21) Anmeldenummer: **00954592.2**

(22) Anmeldetag: **05.08.2000**

(51) Int Cl.$^7$: **B60S 1/38**

(86) Internationale Anmeldenummer:
**PCT/EP2000/007620**

(87) Internationale Veröffentlichungsnummer:
**WO 2001/014182 (01.03.2001 Gazette 2001/09)**

(54) **WISCHBLATT ZUM REINIGEN EINER INSBESONDEREN GEWÖLBTEN SCHEIBE AN EINEM FAHRZEUG**

WIPER BLADE FOR CLEANING A WINDSCREEN, IN PARTICULAR, A CURVED WINDSCREEN OF A VEHICLE

RACLETTE D'ESSUIE-GLACE POUR LE NETTOYAGE D'UNE VITRE, NOTAMMENT D'UNE VITRE BOMBEE, SUR UN VEHICULE

(84) Benannte Vertragsstaaten:
**DE ES FR GB IT**

(30) Priorität: **26.08.1999  DE 19940492**

(43) Veröffentlichungstag der Anmeldung:
**22.05.2002   Patentblatt 2002/21**

(73) Patentinhaber: **Valeo Wischersysteme GmbH 74321 Bietigheim-Bissingen (DE)**

(72) Erfinder:
 • **EGNER-WALTER, Bruno D-74076 Heilbronn (DE)**

 • **DÖRR, Wilhelm D-74321 Bietigheim-Bissingen (DE)**

(74) Vertreter: **Jahn, Wolf-Diethart et al Valeo Wischersysteme GmbH, Poststrässle 10 74321 Bietigheim-Bissingen (DE)**

(56) Entgegenhaltungen:
**EP-A- 0 477 804          DE-A- 3 823 001 DE-B- 1 197 338**

**Beschreibung**

Die Erfindung betrifft ein Wischblatt zum Reinigen einer insbesondere gewölbten Scheibe an einem Fahrzeug mit einem Traggestell mit wenigstens zwei Krallen zum Halten und Führen einer gummiartigen Wischleiste, wobei das Traggestell wenigstens einen Krallenbügel mit einer Kralle an wenigstens einem Bügelende aufweist und der Krallenbügel in einem Abstand von der Kralle über ein Schwenklager mit einem Wischarm verbindbar oder mit einem weiteren Bügel des Traggestells verbunden ist, wobei die Kralle im Krallengrund eine im Betriebszustand des Scheibenwischers auf die Oberseite der Wischleiste drückende Auflagefläche aufweist, die in Bügellängsrichtung durch einen äußeren Rand und einen inneren Rand begrenzt ist und eine maximale Länge besizt, und wobei von dem Krallengrund in Richtung auf die zu wischende Scheibe zwei entlang den gegenüberliegenden Längsseiten der Wischleiste verlaufende Krallenwandungen ausgehen, die in Krallenansätze übergehen, welche die zu der Wischleiste gehörende Rückenleiste untergreifen oder in seitliche Längsnuten der Rückenleiste eingreifen, wobei die Krallenansätze in Bügellängsrichtung jeweils durch einen äußeren Rand und einen inneren Rand begrenzt sind.

Ein Wischblatt mit einer solchen Kralle ist seit langem, beispielsweise aus der DE-B-1,197,338, bekannt und findet in nahezu jeder heute verwendeten Scheibenwischvorrichtung zum Reinigen einer Scheibe an einem Kraftfahrzeug Verwendung. Die Wischleiste eines solchen Wischblattes ist dabei in den Krallen zumindest bedingt in Längsrichtung so verschiebbar angeordnet, dass eine Anpassung der elastischen Wischleiste an die Oberflächenform der zu wischenden Scheibe weitgehend ermöglicht wird. Die an einem Krallenbügel angeordneten Krallen dienen dabei zur Führung der Wischleiste entlang der zu wischenden Scheibe und zur Übertragung der erforderlichen Andruckkraft auf die Wischleiste, wobei die Scheibe auch eine gewölbte Form aufweisen kann. Dabei ist bei der Gestaltung von Krallen zu berücksichtigen, dass diese die Wischleiste bzw. deren Rückenleiste möglichst eng und präzise führen. Trotzdem muss die Wischleiste in der Kralle genügend Spiel haben, um eine Längsverschieblichkeit der Wischleiste in der Kralle zu ermöglichen.

Solche bekannten Wischblätter weisen allerdings den Nachteil auf, dass sie für die Verwendung von zumindest abschnittsweise gewölbten Scheiben schlecht geeignet sind.

Der Zielkonflikt, einerseits eine enge und genaue Führung der Wischleiste in -der Kralle zu gewährleisten und andererseits beim Wischen einer gewölbten Scheibe in der Kralle genügend Spiel für eine freie Längsverschiebbarkeit der Wischleiste zu ermöglichen, kann mit den bekannten Wischblättern nicht gelöst werden. Bei der Verwendung von Krallen bekannter Wischblätter für, insbesondere an den Scheibenrändern, stark gewölbte Scheiben klemmt die Wischleiste entweder aufgrund ihrer Krümmung oder sie schwimmt aufgrund des zu großen Spiels in der Kralle, so dass eine optimale Führung der Wischleiste nicht gewährleistet ist. Die Folge ist ein unbefriedigendes Wischergebnis.

Der vorliegenden Erfindung liegt deshalb die Aufgabe zugrunde, ein Wischblatt mit Krallen zur zumindest teilweisen Aufnahme einer gummiartigen Wischleiste zu schaffen, bei denen eine gute Führung und eine gute Längsverschieblichkeit der gummiartigen Wischleiste in den Krallen auch bei gewölbter bzw. abschnittsweise gewölbter Scheibe gewährleistet ist.

Zur Lösung der Aufgabe wird ein Wischblatt der eingangs beschriebenen Art vorgeschlagen, bei dem die Krallenansätze mindestens einer Kralle des Wischblattes in Bügellängsrichtung in Relation zu der Auflagefläche im Krallengrund derart in Richtung zu dem Schwenklager des Krallenbügels versetzt sind, dass die äußeren Ränder der Krallenansätze innerhalb eines Bereiches angeordnet sind, der sich von einschließlich der Halfte der maximalen Länge der Auflagefläche bis in den Abstand zwischen dem inneren Rand der Auflagefläche und dem Schwenkla-ger des Krallenbügels erstreckt. Im Sinne der Erfindung ist ein äußerer Rand der Auflagefläche im Krallengrund oder ein äußerer Rand eines Krallenansatzes immer derjenige Rand, der in Bügellängsrichtung nach außen weist. Dementsprechend ist ein innerer Rand der Auflagefläche im Krallengrund oder ein innerer Rand eines Krallenansatzes immer derjenige Rand, der in Bügellängsrichtung nach innen weist.

Alternativ kann dieser Sachverhalt auch so ausgedrückt werden, dass bei wenigstens einer Kralle des Wischblattes die auf die Scheibe projizierten Krallenansätze in Relation zu der auf die Scheibe projizierte Auflagefläche derart in Richtung zu dem Schwenklager des Krallenbügels versetzt sind, dass die auf die Scheibe projizierten Krallenansätze von der auf die Scheibe projizierten Auflagefläche in Längsrichtung des Krallenbügels nicht oder höchstens von der dem Schwenklager zugewandten Hälfte der auf die Scheibe projizierten Auflagefläche überlappt sind.

Die erfindungsgemäß gestaltete Kralle kann bei unterschiedlichsten Traggestell- oder Bügelkonstruktionen verwendet werden. So kann ein erfindungsgemäß ausgebildeter Krallenbügel beispielsweise ein direkt an dem Wischarm anlenkbarer Hauptbügel mit jeweils einer Kralle an jedem Ende oder ein an einem übergeordneten Bügel angelenkter Krallenbügel mit jeweils einer Kralle an einem Ende oder ein Bügel mit einer Kralle an nur einem Ende und einem Krallenbügel an seinem anderen Ende sein. Ebenso kann das Traggestell eines Wischblattes zwei Bügel aufweisen, die jeweils an einem Ende über ein Gelenk miteinander verbunden sind und wenigstens einer dieser Bügel an seinem anderen Ende eine erfindungsgemäß ausgebildete Kralle aufweist. Die Erfindung soll weiterhin Wischblätter mit solchen Traggestell- oder Bügelkonstruktionen umfassen, bei denen die Kralle bzw. die Krallen nicht an der Unterseite des Bügels angeordnet, sondern beispielsweise seitlich am bzw. seitlich vom Bügel angeordnet oder ausgebildet sind.

Weiterhin soll klargestellt sein, dass erfindungsgemäße Wischblätter für alle möglichen Scheiben, wie Windschutzscheiben, Heckscheiben, Seitenscheiben, (allgemein Sichtscheiben), Scheinwerferscheiben, Heckleuchtenscheiben, Rückstrahler und dergleichen, an unterschiedlichen Fahrzeugen, insbesondere Kraftfahrzeugen, verwendet werden können.

Das erfindungsgemäße Wischblatt hat dabei den Vorteil, dass auch bei stärker gewölbten Scheiben eine gegenüber bekannten Wischblättern bessere Anpassung und Führung der gummiartigen Wischleiste an der zu wischenden Scheibe gewährleistet ist. Ein Verklemmen der Wischleiste in der Kralle, wie es nach dem Stand der Technik bei stärker gewölbten Scheiben regelmäßig der Fall ist, kann erfindungsgemäß nicht stattfinden.

Eine optimale Gestaltung des Wischblattes ergibt sich durch eine Weiterbildung der Erfindung, wonach zwischen dem inneren Rand der im Krallengrund vorgesehenen Auflagefläche und den äußeren Rändern der Krallenansätze ein Abstand d, mit d gleich oder größer Null vorhanden ist.

Der für die Wischleiste relevante Querschnitt berechnet sich aus der Breite b der Kralle und dem für den von der Kralle aufgenommenen Teil der Wischleiste relevanten Öffnungsmaß c der Kralle. Das Öffnungsmaß c bestimmt sich dabei als Hypothenuse des Dreiecks mit den Katheten des Abstandes d und der Krallenhöhe a. Daraus ergibt sich, dass wenn d größer oder gleich Null ist, das Öffnungsmaß c größer oder gleich der Krallenhöhe a ist. Demzufolge ist also gewährleistet, dass der für den von der Kralle aufgenommenen Teil der Wischleiste relevante Querschnitt der Kralle erfindungsgemäß immer größer oder gleich der Krallenhöhe a ist, insbesondere auch bei gekrümmten Scheiben. Durch die nötige Freiheit der Wischleiste in der Kralle ist eine Längsverschieblichkeit der Wischleiste stets möglich und ein Verklemmen der Wischleiste findet nicht statt, wodurch ein entsprechend gutes Wischergebnis erzielt wird.

Nach einer vorteilhaften Ausgestaltung der Erfindung sollen in Seitenansicht des Wischblattes die beiden Krallenansätze miteinander fluchten bzw. soll der Abstand d bei beiden Krallenansätzen gleich groß sein. Dadurch wird eine gleichmäßige Führung und Kraftübertragung der Wischleiste an der Scheibe ermöglicht.

In Ausgestaltung der Erfindung ist in Bügellängsrichtung der eine Krallenansatz in Relation zu dem anderen Krallenansatz versetzt angeordnet bzw. ist der Abstand d1 des einen Krallenansatzes verschieden dem Abstand d2 des anderen Krallenansatzes. Eine solche Asymmetrie der Kralle kann, insbesondere bei entsprechenden Scheiben- und/oder Wischblattgeometrien, vorteilhaft sein.

Eine Weiterbildung der Erfindung sieht vor, dass die Wischleiste in Draufsicht gebogen ist und dass der Abstand d1 des einen Krallenansatzes auf der Krallenseite, die auf der Außenseite der Wischleistenbiegung liegt, kleiner ist als der Abstand d2 auf der anderen Krallenseite, die auf der Innenseite der Wischleistenbiegung liegt. Eine solche Weiterbildung der Erfindung hat insbesondere den Vorteil, dass nicht nur eine optimale Anpassung der Wischleiste an eine stark gewölbte Scheibe gewährleistet wird, sondern dass zudem bei der Verwendung eines in Draufsicht gebogenen Scheibenwischers die Kralle so ausgebildet ist, dass die Wischleiste in ihrer Längsverschieblichkeit nicht durch die Kralle behindert wird. In Draufsicht gebogene Scheibenwischer finden überwiegend aus stilistischen und ästhetischen Gründen bei Kraftfahrzeugen Verwendung.

Nach einer anderen Ausgestaltung der Erfindung sind die Abstände d1 und d2 abhängig von dem Grad der in Draufsicht gebogenen Wischleiste. Bei zum Beispiel nur gering gebogenen Wischleisten ist der Unterschied zwischen den Abständen d1 und d2 kleiner, als bei insbesondere sehr stark gebogenen Wischleisten. Damit kann eine optimale Längsverschieblichkeit der Wischleiste auch bei in Draufsicht gebogenen Wischleisten gewährleistet werden.

Eine Variante der Erfindung sieht vor, dass die der Wischleiste zugewandte Seite des Krallengrundes in Bezug auf die Krallenansätze und/oder die Krallenansätze in Bezug auf den Krallengrund konvex gewölbt ist bzw. gewölbt sind. Durch solche Wölbungen wird ermöglicht, dass die Längsverschieblichkeit der Wischleiste, insbesondere bei Scheiben mit stark unterschiedlicher Wölbung, verbessert wird.

Eine Weiterbildung der Erfindung sieht vor, dass die wenigstens eine Kralle an dem Krallenbügel eine Endkralle des Wischblattes ist. Eine Endkralle ist diejenige Kralle an einem Wischblatt, welche dem äußeren Scheibenrand am nächsten liegt. Insbesondere in diesem Bereich sind Scheiben von Kraftfahrzeugen meist stärker gewölbt als im mittleren Scheibenbereich. Deshalb ist es gerade dort sinnvoll, Krallen einzusetzen, die eine optimale Führung und Kraftübertragung der Wischleiste an den, insbesondere stark gewölbten, Scheibenabschnitten gewährleisten.

Weitere vorteilhafte Ausgestaltungen und Einzelheiten sind der folgenden Beschreibung zu entnehmen, in der die Erfindung anhand des in der Zeichnung dargestellten Ausführungsbeispiels näher beschrieben und erläutert ist. Es zeigen:

Figur 1　　　　　　einen Wischhebel einer Scheibenwischvorrichtung in Seitenansicht,

Figur 2　　　　　　einen Krallenbügel eines bekannten Wischblattes in Seitenansicht,

Figur 3 und 4　　　zwei verschiedene Ausführungen einer Kralle eines bekannten Wischblattes in Seitenansicht,

Figur 5, 6 und 7   drei verschiedene Krallen eines erfindungsgemäßen Wischblattes in
Seitenansicht und

Figur 8   die in Figur 7 gezeigte Kralle in
Draufsicht.

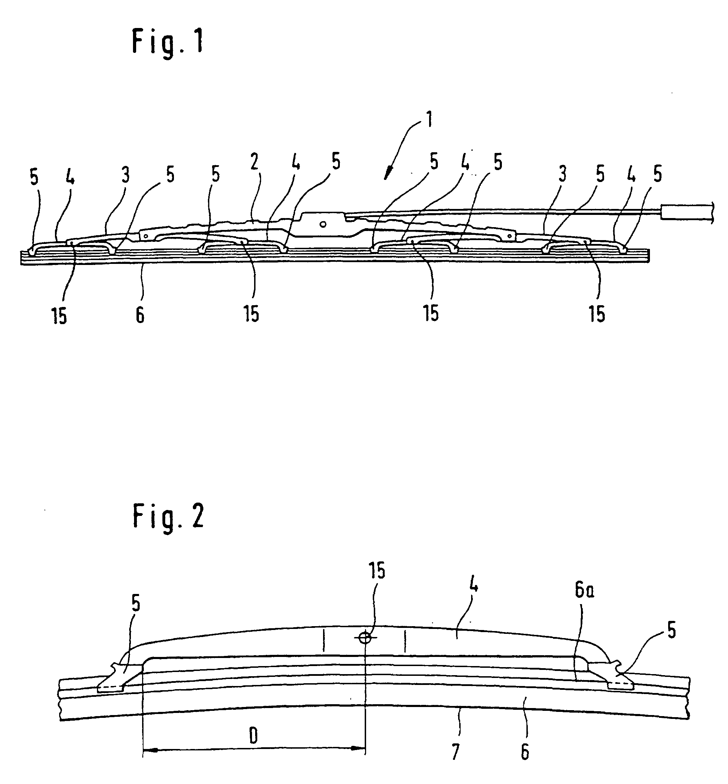

Die Figur 1 zeigt beispielhaft einen Wischhebel 1 einer bekannten Scheibenwischvorrichtung zum Reinigen einer Scheibe an einem Kraftfahrzeug mit einem Hauptbügel 2, an dem symmetrisch zwei Bügel 3 angeordnet sind, welche ihrerseits mit Krallenbügeln 4 verbunden sind. Die Krallenbügel 4 sind dabei mittels den Schwenklagern 15 gelenkig bezüglich den Bügeln 3 gelagert. An ihren gegenüberliegenden Enden weisen die Krallenbügel 4 auf ihrer dem Hauptbügel 2 abgewandten Seite je eine Kralle 5 auf. Die Krallen 5 nehmen dabei die zu einer gummiartigen Wischleiste 6 gehörende Rückenleiste 6a auf, die insbesondere durch nicht dargestellte Federschienen in Längsnuten der Rückenleiste 6a verstärkbar ist.

Abweichend von dieser Art eines Wischblattes könnte im Rahmen der Erfindung auch der Hauptbügel 2 direkt als Krallenbügel ausgebildet sein, indem an seinen gegenüberliegenden Enden jeweils eine Kralle vorgesehen ist.

Die Figur 2 zeigt einen Krallenbügel 4 mit einem Schwenklager 15 in einem Abstand D von der wenigstens einen Kralle 5, wobei an den Enden des Krallenbügels 4 zwei bekannte Krallen 5 angeordnet sind. Diese Krallen 5 nehmen dabei die zu der Wischleiste 6 gehörende Rückenleiste 6a auf, die an ihrer dem Krallenbügel 4 abgewandten Seite eine Wischkante 7 aufweist.

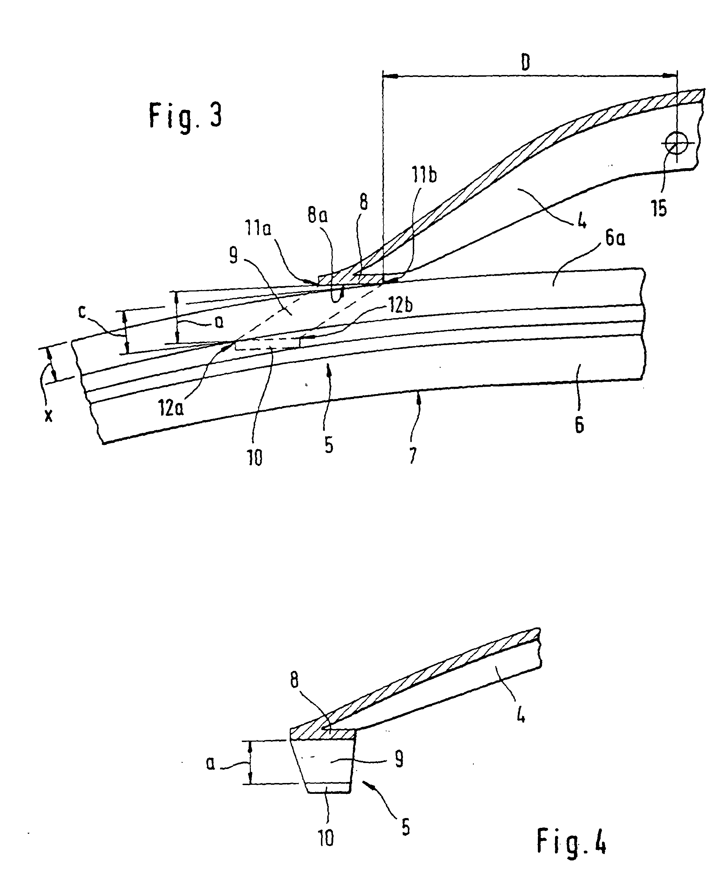

Die Figur 3 zeigt einen Abschnitt des Krallenbügels 4 mit dem Schwenklager 15 und mit einer Kralle 5 eines bekannten. Wischblattes. Die Kralle 5 weist dabei einen Krallengrund 8, zwei an dem Krallengrund 8 angeordnete, die Längsseiten der Wischleiste 6 bzw. Rückenleiste 6a führenden, Krallenwandungen 9 und an den Krallenwandungen 9 angeordnete, die Wischleiste 6 bzw. Rückenleiste 6a teilweise umgreifende Krallenansätzen 10, auf. Die Krallenansätze 10 sind dabei weitgehend parallel zu dem Krallengrund 8. Zwischen dem Krallengrund 8 und dem Krallenansatz 10 ist die Höhe x des Teiles der Wischleiste 6 bzw. deren Rückenleiste 6a gezeigt, der von der Kralle 5 aufgenommen ist. Die Wischleiste 6 bzw. Rückenleiste 6a ist dabei in der Seitenansicht leicht gekrümmt dargestellt, insbesondere um sich an eine nicht dargestellte gewölbte Scheibe anzupassen. Die Kralle 5 weist die Krallenhöhe a zwischen dem Krallengrund 8 und dem Krallenansatz 10 auf. Grundsätzlich gilt, dass die Höhe x des von der Kralle 5 aufzunehmenden Teiles der Wischleiste 6 kleiner als die Krallenhöhe a sein muss, damit eine Längsverschieblichkeit der Wischleiste 6 in der Kralle 5 gewährleistet ist. Allerdings ist zu berücksichtigen, dass bei der Anpassung der Wischleiste 6 an gewolbte Scheiben nicht nur die Krallenhöhe a für die Längsverschieblichkeit der Wischleiste 6-alleine entscheidend ist, sondern auch das Figur 3 entnehmbare Krallenöffnungsmaß c, welches sich aus dem Abstand der Tangente an der Wischleiste 6 im Berührungspunkt A mit dem Krallengrund 8 und dem Berührungspunkt B der Wischleiste 6 mit dem Krallenansatz 10 ergibt. Dabei gilt gemäß dem Stand der Technik, dass das Öffnungsmaß c stets kleiner als die Krallenhöhe a ist.

Um eine optimale Führung und Kraftübertragung der Wischleiste 6 an die Scheibe zu gewährleisten, darf die Krallenhöhe a nicht viel größer als die Höhe x an der Wischleiste 6 sein. Dies hat allerdings zur Folge, dass dann das Krallenöffnungsmaß c wiederum nur geringfügig größer ist als die Wischleistenhöhe x, was nur eine geringe Krümmung der Wischleiste in Seitenansicht zulässt und bei stärkerer Krümmung zu einem Klemmen der Wischleiste 6 in der Kralle 5 führt. Wird die Krallenhöhe a erheblich größer als die Wischleistenhöhe x gewählt um eine stärkere Krümmung der Wischleiste zu ermöglichen, beginnt die Wischleiste 6 in der Kralle 5 zu schwimmen. Dies hat eine mangelhafte Wischung der Scheibe zur Folge.

In Figur 4 ist eine andere Kralle 5 eines bekannten Wischblattes dargestellt, bei welchem die zu Figur 3 geschilderte Problematik dadurch abgemildert wird, dass der Krallenansatz 10 eine geringere Länge als der Krallengrund 8 aufweist. Aber auch bei einer solchen Anordnung ist die mögliche Biegung der Wischleiste 6 durch die Krallenhöhe a begrenzt.

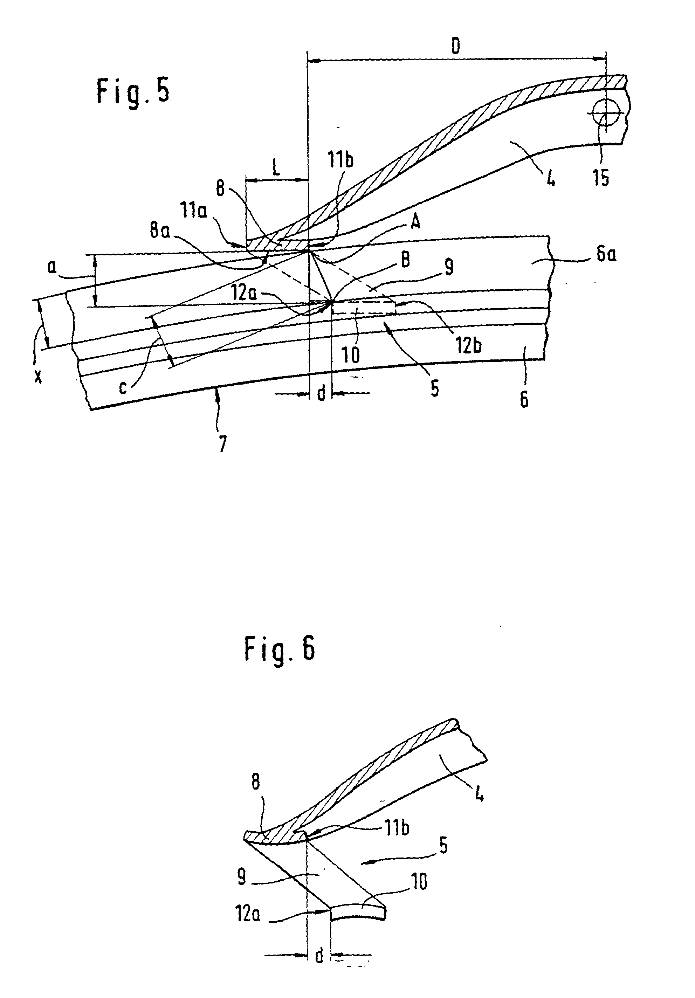

Die in Figur 5 gezeigte Kralle 5 eines erfindungsgemäßen Wischblattes unterscheidet sich von dem bekannten Stand der Technik dadurch, dass in Projektion auf die Scheibe der Krallenansatz 10 näher an dem Schwenklager 15 des Krallenbügels 4 vorhanden ist, als der Krallengrund 8. Dabei ist der Abstand d zwischen dem inneren Rand 11b der Auflagefläche 8a des Krallengrundes 8 und dem äußeren Rand 12a des Krallenansatzes größer oder gleich Null. Erfindungsgemäß ist das Öffnungsmaß c der Kralle 5 zwischen dem Berührungspunkt A der Wischleiste 6 in gebogenem Zustand an dem Krallengrund 8 und dem Berührungspunkt B der Wischleiste 6 im gebogenen Zustand an dem Krallenansatz 10 stets größer als die Krallenhöhe a. Wie aus Figur 5 entnehmbar, erhält man das rechtwinklige Dreieck mit den beiden Katheten a und d und dem Maß c als Hypothenuse.

Damit berechnet sich c folgemdermaßen:

$$c = \sqrt{d^2 + a^2}$$

Damit ist das Maß c bei d größer Null stets größer a. Wenn die Krallenhöhe a auch nur geringfügig größer als die Höhe x des von der Kralle 5 aufgenommenen Teiles der Wischleiste 6 bzw. Rückenleiste 6a ausgeführt wird, kommt es aufgrund der beschriebenen Geometrien auch bei der in Seitenansicht in Figur 5 stark gekrümmten Wischleiste 6 nicht zum Klemmen der Wischeleiste 6 in der Kralle 5.

Da allerdings die Höhe x der Wischleiste 6 stets kleiner als das Krallenhöhe a sein muss, um bei nicht gekrümmten Zustand der Wischleiste 6 eine Längsverschieblichkeit der Wischleiste 6 zu gewahrleisten, gilt erst recht, dass diese Längsverschieblichkeit in gekrümmten Zustand stets gegeben ist, da das Krallenöffnungsmaß c (Hypothenuse) stets größer oder gleich als die Krallenhöhe a (Kathete) ist, wenn der Abstand d (Kathete) größer oder gleich Null ist. Ein Klemmen der Wischleiste 6 in der Kralle 5 ist damit erfindungsgemäß, insbesondere auch bei stark gewölbten Scheiben, nicht mehr möglich.

Die in Figur 6 gezeigte Kralle 5 eines erfindungsgemäßen Wischblattes mit einem Abstand d größer Null weist die Besonderheit auf, dass die der Wischleiste 6 zugewandte Seite des Krallengrundes 8 und die dem Krallenbügel 4 zugewandte Seite des Krallenansatzes 10 eine konvexe Wölbung aufweisen. Durch eine solche Wölbung wird eine bessere Anpassungsfähigkeit der Wischleiste 6 an die Kralle 5 ermöglicht, wodurch eine bessere Führung und bessere Längsverschieblichkeit der Wischleiste 6 in der Kralle 5 gewährleistet wird, was ein entsptrechend gutes Wischergebnis zur Folge hat.

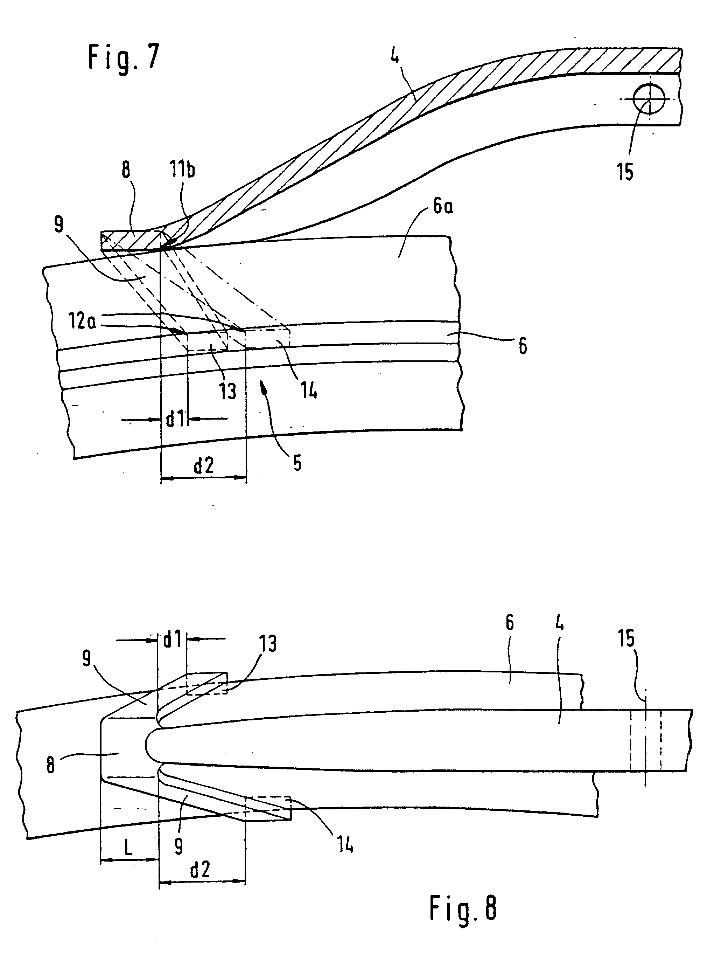

Die Figuren 7 und 8 zeigen eine andere Ausführungsform einer erfindungsgemäßen Kralle 5, wobei zwischen dem inneren Rand 11b der Auflagefläche 8a am Krallengrung 8 und den äußeren Rändern 12a der beiden Krallenansätze 13 und 14 jeweils ein unterschiedlicher Abstand d1 bzw. d2 besteht. Dabei ist die Wischleiste 6 nicht nur in Seitenansicht gekrümmt, um sich an eine gewölbte Scheibe anzupassen, sondern auch in Draufsicht gebogen, wie in Figur 8 gezeigt. Solche in Draufsicht gebogenen Wischblätter werden überwiegend aus stilistischen Gründen an Fahrzeugen verwendet um beispielsweise eine optisch Anpassung an den benachbarten, gebogenen Seitenrand der Fahrzeugscheibe zu erreichen. Auch bei solchen Wischblättern ist es nötig, die Wischleiste 6 möglichst genau zu führen und eine gute Längsverschieblichkeit zu gewährleisten.

Wie in Figur 8 deutlich zu erkennen ist, ist der Abstand d1 des Krallenansatzes 13 auf der Krallenseite, die auf der Außenseite der Wischleistenbiegung liegt, kleiner als der Abstand d2 des Krallenansatzes 14 auf der anderen Krallenseite, die auf der Innenseite der Wischleistenbiegung liegt. Gerade durch eine solche Anordnung wird erreicht, dass die in Draufsicht gebogene und ggf. in Seitenansicht gekrümmte Wischleiste 6 eine gute Längsverschieblichkeit aufweist, und nicht aufgrund der Anordnung der Krallenansätze 13 und 14 in gebogenem und/oder gekrümmtem Zustand zum Klemmen kommt.

Vorteilhafterweise sind die in Figur 7 und 8 gezeigten Krallen auch für eine Verwendung von nicht in Draufsicht gebogenen und/oder in Seitenansicht gekrümmten Wischblättern geeignet.

Alle in der Beschreibung, den nachfolgenden Ansprüchen und der Zeichnung dargestellten Merkmale können, sowohl einzeln, als auch in beliebiger Kombination miteinander, erfindungswesentlich sein.

**Patentansprüche**

1. Wischblatt zum Reinigen einer insbesondere gewölbten Scheibe an einem Fahrzeug mit einem Traggestell mit wenigstens zwei Krallen (5) zum Halten und Führen einer gummiartigen Wischleiste (6), wobei das Traggestell wenigstens einen Krallenbügel (4) mit einer Kralle (5) an wenigstens einem Bügelende aufweist und der Krallenbügel (4) in einem Abstand (D) von der Kralle (5) über ein Schwenklager (15) mit einem Wischarm (1) verbindbar oder mit einem weiteren Bügel (2, 3) des Traggestells verbunden ist, wobei die Kralle (5) im Krallengrund (8) eine im Betriebszustand des Scheibenwischers auf die Oberseite der Wischleiste (6) drückende Auflagefläche (8a) aufweist, die in Bügellängsrichtung durch einen äußeren Rand (11a) und einen inneren Rand (11b) begrenzt ist und eine maximale Länge (L) besitzt, und wobei von dem Krallengrund (8) in Richtung auf die zu wischende Scheibe zwei entlang den gegenüberliegenden Längsseiten der Wischleiste (6) verlaufende Krallenwandungen (9) ausgehen, die in Krallenansätze (10, 13, 14) übergehen, welche die zu der Wischleiste (6) gehörende Rückenleiste (6a) untergreifen oder in seitliche Längsnuten der Rückenleiste (6) eingreifen, wobei die Krallenansätze (10, 13, 14) in Bügellängsrichtung jeweils durch einen äußeren Rand (12a) und einen inneren Rand (12b) begrenzt sind, **dadurch gekennzeichnet, dass** die Krallenansätze (10) mindestens einer Kralle (5) des Wischblattes (2) in Bügellängsrichtung in Relation zu der Auflagefläche (8a) derart in Richtung zu dem Schwenklager (15) des Krallenbügels (4) versetzt sind, dass die äußeren Ränder (12a) der Krallenansätze (10) innerhalb eines Bereiches angeordnet sind, der sich von einschließlich der Hälfte der maximalen Länge (L) der Auflagefläche (8a) bis in den Abstand zwischen dem inneren Rand (11b) der Auflagefläche (8a) und dem Schwenklager (15) des Krallenbügels (4) erstreckt.

2. Wischblatt nach Anspruch 1, **dadurch gekennzeichnet, dass** zwischen dem inneren Rand (11b) der Auflagefläche (8a) und den äußeren Rändern (12a) der Krallenansätze (10, 13, 14) ein Abstand d, mit d gleich oder größer Null vorhanden ist.

3. Wischblatt nach Anspruch 1 bzw. 2, **dadurch gekennzeichnet, dass** in Seitenansicht des Wischblattes die beiden Krallenansätze (10) miteinander fluchten bzw. dass der Abstand d bei beiden Krallenansätzen (10) gleich groß ist.

4. Wischblatt nach Anspruch 1 bzw. 2, **dadurch gekennzeichnet, dass** in Bügellängsrichtung der Krallenansatz (13) in Relation zu dem Krallenansatz (14) versetzt angeordnet ist bzw. dass der Abstand d1 des einen Krallenansatzes (13) verschieden dem Abstand d2 des anderen Krallenansatzes (14) ist.

5. Wischblatt nach Anspruch 4, **dadurch gekennzeichnet, dass** die Wischleiste (6) in Draufsicht gebogen ist und dass der Abstand d1 des einen Krallenansatzes (13) auf der Krallenseite, die auf der Außenseite der Wischleistenbiegung liegt, kleiner ist als der Abstand d2 auf der anderen Krallenseite (14), die auf der Innenseite der Wischleistenbiegung liegt.

6. Wischblatt nach Anspruch 5, gekennzeichnet, dass die Abstände d1 und d2 abhängig von dem Grad der in Draufsicht gebogenen Wischleiste (6) sind.

7. Wischblatt nach einem der vorhergehenden Ansprüche, **dadurch gekennzeichnet, dass** die der Wischleiste (6) zugewandte Seite des Krallengrundes (8) in Bezug auf die Krallenansätze (10, 13, 14) und/oder die Krallenansätze (10, 13, 14) in Bezug auf den Krallengrund (8) konvex gewölbt ist bzw. gewölbt sind.

8. Wischblatt nach einem der vorhergehenden Ansprüche, **dadurch gekennzeichnet, dass** die wenigstens eine Kralle (5) an dem Krallenbügel (4) eine Endkralle des Wischblattes ist.

**Claims**

1. A wiper blade for cleaning in particular a curved screen on a vehicle, having a supporting frame with at least two claws (5) for holding and guiding a rubber-type wiper squeegee (6), wherein the supporting frame comprises at least one claw yoke (4) with a claw (5) at at least one yoke end and the claw yoke (4) may be connected with a wiper arm (1) or is connected with a further yoke (2, 3) of the supporting frame at a distance (D) from the claw (5) via a pivot bearing (15), wherein the claw (5) comprises in the claw base (8) a bearing surface (8a) pressing on the top of the wiper squeegee (6) when the screen wiper is in the operating state, which bearing surface (8a) is defined in the longitudinal direction of the yoke by an outer edge (11a) and an inner edge (11b) and has a maximum length (L), and wherein two claw walls (9) extending over the opposing longitudinal sides of the wiper squeegee (6) extend from the claw base (8) in the direction of the screen to be wiped, which claw walls (9) develop into claw lugs (10, 13, 14), which engage under the back strip (6a) belonging to the wiper squeegee (6) or engage in lateral longitudinal grooves in the back strip (6), wherein the claw lugs (10, 13, 14) are each defined in the longitudinal direction of the yoke by an outer edge (12a) and an inner edge (12b), **characterised in that** the claw lugs (10) of at least one claw (5) of the wiper blade (2) are offset in the longitudinal direction of the yoke in relation to the bearing surface (8a) in such a way in the direction of the pivot bearing (15) of the claw yoke (4) that the outer edges (12a) of the claw lugs (10) are arranged within a zone which extends from inclusively half way along the maximum length (L) of the bearing surface (8a) as far as into the space between the inner edge (11b) of the bearing surface (8a) and the pivot bearing (15) of the claw yoke (4).

2. A wiper blade according to claim 1, **characterised in that** there is a distance d, with d being equal to or greater than zero, between the inner edge (11b) of the bearing surface (8a) and the outer edges (12a) of the claw lugs (10, 13, 14).

3. A wiper blade according to claim 1 or 2, **characterised in that** the two claw lugs (10) are aligned with one another, when the wiper blade is viewed from the side, or **in that** the distance d is of equal magnitude for both claw lugs (10).

4. A wiper blade according to claim 1 or 2, **characterised in that** the claw lug (13) is offset in relation to the claw lug (14) in the longitudinal direction of the yoke or **in that** the distance d1 relating to the one claw lug (13) is different from the distance d2 relating to the other claw lug (14).

5. A wiper blade according to claim 4, **characterised in that** the wiper squeegee (6) is bent in plan view and **in that** the distance d1 relating to the one claw lug (13) on the claw side located on the outside of the wiper squeegee bend is less than the distance d2 on the other claw side (14), which is located on the inside of the wiper squeegee bend.

6. A wiper blade according to claim 5, **characterised in that** the distances d1 and d2 are dependent on the degree of bend of the wiper squeegee (6) bent in plan view.

7. A wiper blade according to any one of the preceding claims, **characterised in that** the side of the claw base (8) facing the wiper squeegee (6) is convexly curved relative to the claw lugs (10, 13, 14) and/or the claw lugs (10, 13, 14) are convexly curved relative to the claw base (8).

8. A wiper blade according to any one of the preceding claims, **characterised in that** the at least one claw (5) on the claw yoke (4) is an end claw of the wiper blade.


**Revendications**

1. Raclette d'essuie-glace destinée à nettoyer une vitre notamment bombée au niveau d'un véhicule avec un châssis porteur muni d'au moins deux crampons (5) pour maintenir et guider une baguette d'essuie-glace (6) caoutchouteuse, le châssis porteur présentant au moins un étrier de crampon (4) muni d'un crampon (5) au niveau d'au moins une extrémité de l'étrier et l'étrier de crampon (4) pouvant être relié, via un palier pivotant (15), à un bras de monture d'essuie-glace (1) à un intervalle (D) du crampon (5) ou est relié à un autre étrier (2, 3) du châssis porteur, le crampon (5) comportant dans le fond de crampon (8) une surface d'appui (8a) poussant sur la face supérieure de la baguette d'essuie-glace (6) dans l'état de service de l'essuie-glace, qui est limitée dans le sens longitudinal de l'étrier par un bord extérieur (11a) et un bord intérieur (11b) et présente une longueur (L) maximale, et deux parois de crampon (9), s'étendant le long des faces longitudinales opposées de la baguette d'essuie-glace (6), partant du fond de crampon (8) en direction de la vitre à balayer, qui se transforment en saillies de crampon (10, 13, 14) qui sous-tendent la baguette dorsale (6a) appartenant à la baguette d'essuie-glace (6) ou s'engagent dans des rainures longitudinales latérales de la baguette dorsale (6), les saillies de crampon (10, 13, 14) étant limitées dans le sens longitudinal de l'étrier respectivement par un bord extérieur (12a) et un bord intérieur (12b), **caractérisée en ce que** les saillies de crampon (10) d'au moins un crampon (5) de la raclette d'essuie-glace (2) sont décalées, dans le sens longitudinal de l'étrier par rapport à la surface d'appui (8a), de telle manière dans la direction du palier pivotant (15) de l'étrier de crampon (4) que les bords extérieurs (12a) des saillies de crampon (10) sont agencés à l'intérieur d'une zone qui s'étend de la moitié comprise de la longueur (L) maximale de la surface d'appui (8a) jusque dans l'intervalle entre le bord intérieur (11b) de la surface d'appui (8a) et le palier pivotant (15) de l'étrier de crampon (4).

2. Raclette d'essuie-glace selon la revendication 1, **caractérisée en ce qu'** un intervalle d, d étant égal ou supérieur à zéro, est présent entre le bord intérieur (11b) de la surface d'appui (8a) et les bords extérieurs (12a) des saillies de crampons (10, 13, 14).

3. Raclette d'essuie-glace selon la revendication 1 ou 2, **caractérisée en ce que** les deux saillies de crampon (10) en vue latérale de la raclette d'essuie-glace sont alignées l'une par rapport à l'autre ou que l'intervalle d au niveau des deux saillies de crampon (10) est aussi grand.

4. Raclette d'essuie-glace selon la revendication 1 ou 2, **caractérisée en ce que** la saillie de crampon (13) dans le sens longitudinal de l'étrier est agencée de manière décalée par rapport à la saillie de crampon (14) ou que l'intervalle d1 d'une saillie de crampon (13) diffère de l'intervalle d2 de l'autre saillie de crampon (14).

5. Raclette d'essuie-glace selon la revendication 4, **caractérisée en ce que** la baguette d'essuie-glace (6) est incurvée en vue de dessus et que l'intervalle d1 d'une saillie de crampon (13) sur la face du crampon, qui est située sur la face extérieure de l'incurvation de la baguette d'essuie-glace, est plus petit que l'intervalle d2 sur l'autre face du crampon (14), qui est située sur la face intérieure de l'incurvation de la baguette d'essuie-glace.

6. Raclette d'essuie-glace selon la revendication 5, **caractérisée en ce que** les intervalles d1 et d2 dépendent du degré de la baguette d'essuie-glace (6) incurvée en vue de dessus.

7. Raclette d'essuie-glace selon l'une des revendications précédentes, **caractérisée en ce que** la face tournée vers la baguette d'essuie-glace (6) du fond de crampon (8) par rapport aux saillies de crampon (10, 13, 14) et / ou les saillies de crampon (10, 13, 14) par rapport au fond du crampon est / ou sont bombée(s) de manière convexe.

8. Raclette d'essuie-glace selon l'une des revendications précédentes, **caractérisée en ce que** le au moins un crampon (5) au niveau de l'étrier de crampon (4) est un crampon final de la raclette d'essuie-glace.

**Fig. 1**

**Fig. 2**

EP 1 206 378 B1

**Fig. 3**

**Fig. 4**

Fig. 5

Fig. 6

Fig. 7

Fig. 8